# EUROPEAN PATENT APPLICATION

(11) **EP 4 782 685 A1**
(43) Date of publication of application: **29.07.2026**
(21) Application number: 26387025.5
(22) Date of filing: 21.02.2026
(51) Int. Cl.: F03G 7/10

(54) **ROTATION SYSTEM FOR CONVERTING GRAVITATIONAL INTO KINETIC ENERGY**

(30) Priority: 23.01.2025 GR 20250100051
(71) Applicant: Mavrakis, Emmanouil, 19016 Artemis Attica (GR)
(72) Inventor: Mavrakis, Emmanouil, 19016 Artemis Attica (GR)

(57) **Abstract**

A rotation mechanism for converting gravitational energy, consisting of two parallel holding wheels (2) connected to a common axis of rotation (1), to form a single rotating frame, several sets of spokes (5) connected to the holding wheels (2), each set of spokes including two parallel rails (10) with a gap between them, to form a passageway for the movement of a carriage (8), which move from the position near the axis to the periphery of the wheel and vice versa, each carriage (8) bears a weight and the weight is forced to move according to a fixed elliptical rail (4) arranged within the frame, in a way that when the two wheels (2) rotate, each weight is driven either closer to the axis (1) on one side of the wheel or closer to the circumference on the opposite side.

## Description

### TECHNICAL FIELD

The present invention relates to a system (mechanism) that utilizes gravitational potential energy to continuously rotate a wheel and convert it into kinetic energy. The inventive mechanism combines rotation, the use of gravitational potential energy, and motion through mechanical components such as wheels, rails, and carriages. It falls within the broader field of mechanical energy and, more specifically, technical solutions involving the development of rotational systems that exploit gravitational forces for motion and potential energy production.

### TECHNOLOGICAL BACKGROUND

So far, there are various mechanisms that attempt to mechanically harness gravitational energy with the help of rotating wheels and weights. However, existing mechanisms are unable to achieve effective, long-term, and continuous rotation without additional external energy supply, as they face problems such as managing the weak torque created by the movement of weights, mechanical losses due to friction, and the lack of appropriate geometric adjustment to maximize the force exerted by gravity.

This patent proposes an innovative system in which the change in the distance of the weights from the axis of rotation is utilized more efficiently in order to achieve continuous wheel movement. The aim of this invention is to develop a mechanism that converts gravitational potential energy into endless rotational motion with minimal friction. Thanks to the specific geometric arrangement and the way the weights are supported, the effective torque is increased, mechanical losses are minimized, and a stable supply of kinetic energy is created, potentially suitable for the production of clean electricity.

More specifically, the disclosure proposes a rotation mechanism based on gravitational energy, consisting of two parallel wheels connected to a common axis of rotation, to form a single rotating frame, several sets of spokes connected to the wheels, each set of spokes including two parallel metallic rails with a gap between them, to form a passageway for the movement of a carriage, similar to the one of a rail, each set of spokes holds a carriage equipped with wheels, said wheels are in contact with the inner walls of the parallel rails of each spoke, similar to the one of a rail, allowing the carriage to move smoothly within the space formed between two adjacent spokes, from the position near the axis to the periphery of the wheel and vice versa, with minimal friction thanks to the wheeled support.

Each carriage bears a weight and transports said weight longitudinally along the spokes and within the space formed between the two spokes from the position near the axis to the periphery of the wheel and vice versa. In addition, an elliptical rail is arranged parallel to the wheels and second carriage, also with claw wheels, which grip and roll on the fixed elliptical rail, in a way that when the two wheels rotate, each weight is driven either closer to the axis on one side of the wheel or closer to the circumference on the opposite side.

Advantageously, the common axis of rotation is substantially horizontal.

Optionally, the spokes can be connected to each other by a multitude of reinforcing means, such as steel bars, to increase stability of the system.

The connecting means between the spokes are shaped so as to absorb the mechanical strains and vibrations caused by the moving weights.

The weights can have any form, nevertheless, experience shows that better results are obtained with cylindrical weights. The weights are made of a material of a high specific weight, such as reinforced concrete or cast iron.

In order to assure a smooth movement of the carriage, its wheels are claw wheels.

The elliptical rail referred above is fixed to the frame of the mechanism.

The claw wheels supporting and guiding the weights are arranged to ensure low-friction rolling contact on the respective rails, precise guidance of the carriages without deviation wheels and that the carriages are prevented from leaving the rails.

The combination of the movement of the weight-bearing carriages and their placement on rails with a gap, combined with the elliptical guide mechanism, creates a complex mechanism that exploits gravitational energy to power rotation with high dynamics and strong torques.

### FIGURES

For a more complete understanding of the invention, I refer to the following drawings:
Figure 1 represents the overall mechanism, the wheels (1), the fixed rail (guide), and the relative position of the weights (3).
Figure 1A represents a perspective view of the moving parts of the mechanism

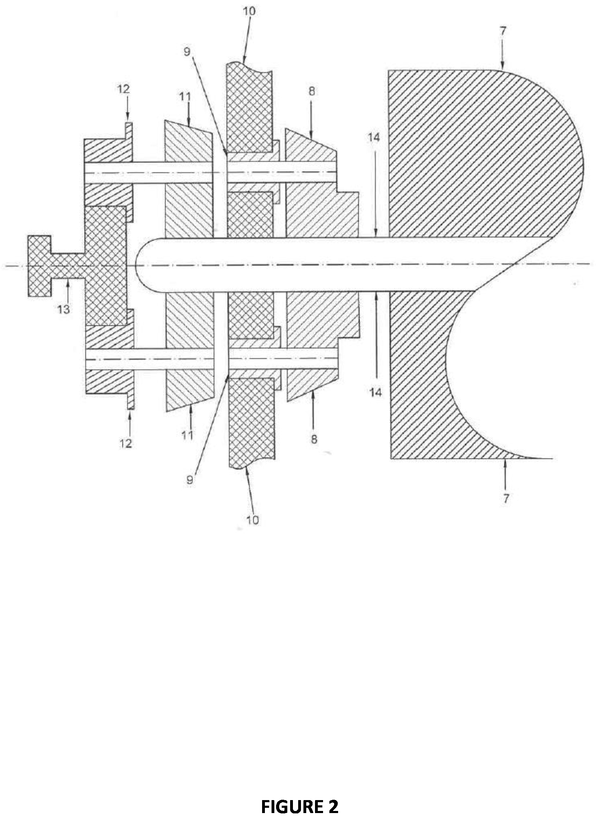

Figure 2 : Detailed view of a weight (7) on the carriage (8) and the claw wheels (9), as well as the elliptical rail (13).

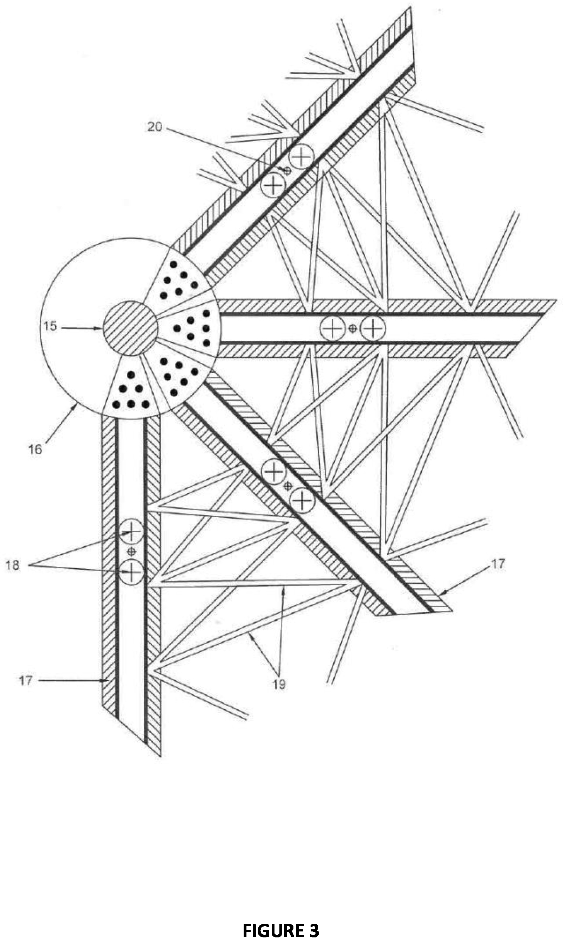

Figure 3 : Detailed view of the sturdy connection between the radius rails (17), the reinforcement plates (19), the axis of rotation (15).

### DETAILED DISCLOSURE OF THE INVENTION

These drawings serve to further facilitate the description and do not limit the scope of protection of the invention.

The whole construction is based on a sturdy metal frame (e.g., steel), not shown in the Figures. The system comprises a rotation axis (1), which is placed in a substantially horizontal position and a plurality of spokes (5). At both ends of the axis there are two parallel wheels (2), also called holding wheels (2).

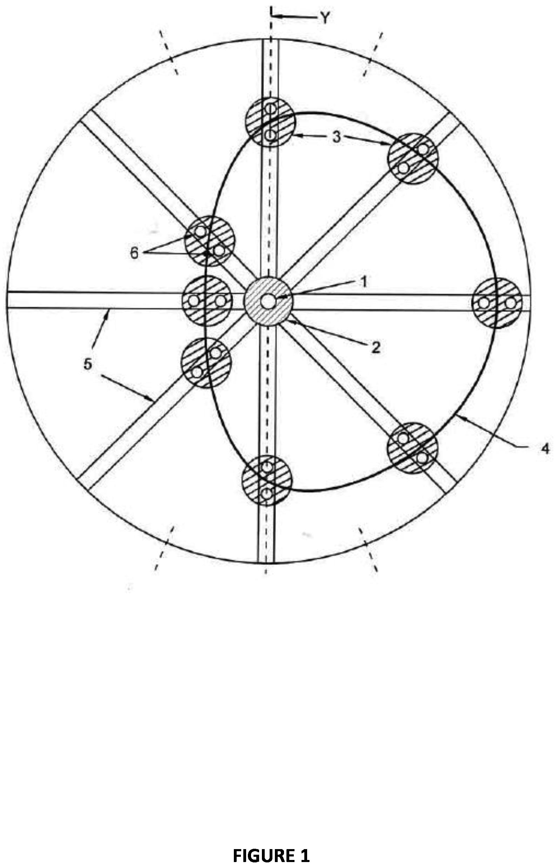

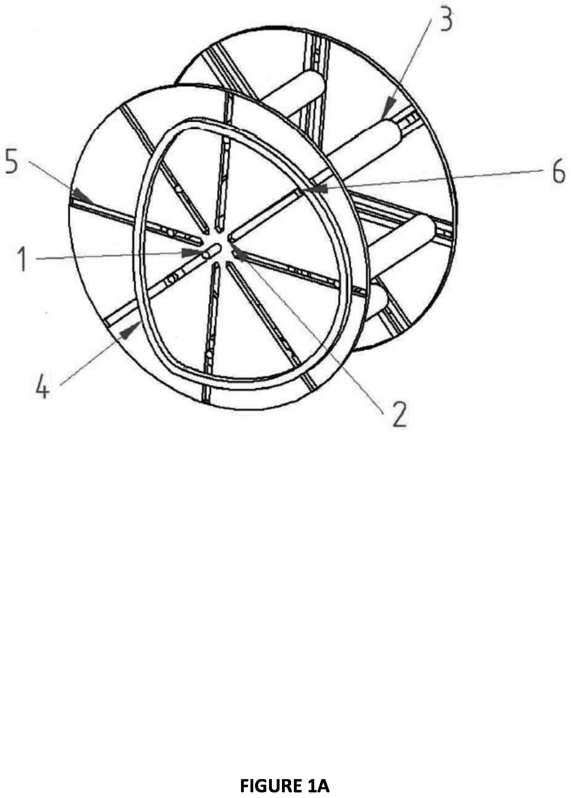

Figure 1 represents one of the two holding wheels (2), a rotation axis (1), which is placed in a substantially horizontal position and a plurality of spokes (5). Each set of spokes consists of two parallel rails (10) with a gap between them. The spokes are positioned opposite each other, or at 180 degrees one to the other and are connected to one of their ends to the axis (1). The strength of the structure is optionally ensured by plates or other connection means (19) between adjacent spokes or rails (17) so that they can withstand the forces exerted during rotation. Cylindrical weights (3) made of high-density material (e.g., reinforced concrete or preferably cast iron) are placed between the two wheels. Each weight (3) is transported by a carriage (8). Two wheels with claws (9) are attached to this stretcher, which rest on the rails of the spoke and allow the weight to be moved from the center to the periphery of the wheel and vice versa.

Figure 1A represents a perspective view of the moving parts of the mechanism, where we see the substantially horizontal axis (1), the two parallel holding wheels (2), the plurality of spokes (5), the cylindrical weights (3), which are moving, either towards the periphery of the wheels or towards the centre or the axis of rotation (1), and an elliptical rail (4) which is attached to the inner side of the frame (not represented), parallel to and close to the wheels.

Each load-bearing carriage has an axis (20) that extends beyond the radius gap and supports a second carriage (11) with claw wheels (12). These wheels (12) grip the elliptical rail (13). Due to the elliptical geometry, when the wheel rotates, the weights are pulled close to the circumference of one side of the wheel and shift closer to the center on the opposite side. The system exploits the change in torque exerted on the spokes, as the weights are at different distances from the horizontal axis of rotation. In the half of the rotation where the weights are furthest from the central axis, the gravitational potential energy is multiplied, creating a strong torque. In the other half, the weights are close to the axis, producing less torque. The difference in torque between the two semicircles continuously fuels the rotation, overcoming the friction of the system.

The result is an almost endless motion of the wheel, which can be exploited for the production of mechanical or electrical energy, using appropriate transmission mechanisms.

The invention can be used to produce clean electricity on an industrial scale or in smaller facilities (e.g., in remote areas, research laboratories, experimental sites, etc.). Due to its design-made of steel components and high-mass weights-it is robust, highly durable, and minimizes losses. Although typical friction in bearings and wheels remains, the net gravitational torque largely compensates for these losses, allowing for the approximation of perpetual motion.

### A Further approach of the clauses and the abstract

1. An endless rotation mechanism based on gravitational potential energy,
   consisting of:
   - Two parallel wheels connected to a common rotation axis (1).
   - Spokes (5) on the wheels, each of which comprises two parallel rails (10) that create a gap between them
   - Cylindrical weights (3) fixed to carriages (8) with wheels (9), which move within the radius of the spokes and can be displaced from the center of the wheel to its periphery and vice versa.
   - An elliptical rail (13), firmly attached to the frame, guides the movement of the weights via a second carriage (11) with claw wheels (12).
2. Mechanism according to clause 1, wherein the spokes (5) are connected to each other by plates (19) or other reinforcing means, forming a sturdy structure capable of withstanding the pressures of the weights during rotation.
3. A mechanism according to clauses 1 and 2, in which the weights (3) are cylindrical in shape and made of a material with a high specific weight (reinforced concrete, cast iron, or similar) in order to achieve the maximum possible gravitational torque.
4. Mechanism according to clauses 1, 2, and 3, wherein each weight (3) is supported on a carriage (8) with claw wheels (9) which are in contact with the inside of the parallel spokes (10) of the beam, while an axis (20) extends outside the spokes, supporting another carriage (11) carrying wheels with claws (12) that grip the fixed elliptical rail (13).
5. A mechanism according to clauses 1-4, wherein the elliptical rail (13) is positioned so that on one side of the wheel it is closer to the axis of rotation (1) and the vertical axis, while on the opposite side it is closer to the periphery of the wheels, achieving a change in the distance of the weights from the central axis, which multiplies the gravitational torque and leads to the continuous rotation of the wheel.

### ABSTRACT

The present invention describes a "Gravity Machine" capable of converting gravitational potential energy into kinetic energy through a rotational system comprising two parallel wheels (1) connected to a common axis. The wheels 5 have spokes from two parallel rails (10), within which cylindrical weights (3) move. Guided by an elliptical rail (13), the weights move periodically from the center of the wheel to its periphery, creating strong torque at specific points of rotation. This geometry allows for almost endless motion, which can be exploited for the production of mechanical or electrical energy. The simple mechanical components, combined with the high weight of the cylinders, ensure that endless motion overcomes friction losses, achieving an efficient and innovative system for exploiting gravitational potential energy.

## Claims

1. A rotation mechanism for converting gravitational energy, consisting of:
i. Two parallel holding wheels (2) connected to a common axis of rotation (1), to form a single rotating frame,
ii. Sets of spokes (5) connected to the holding wheels (2), each set of spokes including two parallel rails (10) with a gap between them, to form a passageway for the movement of a carriage (8),
iii. Each set of spokes holds a carriage (8) equipped with first set of wheels (9), said first set of wheels (9) are in contact with the inner walls of the parallel rails (10) of each spoke, allowing the carriage to move smoothly within the space between two rails, from the position near the axis to the periphery of the wheel and vice versa, with minimal friction,
iv. Each carriage (8) bears a weight (3) and transports said weight (3) along the spokes and within the space formed between the two spokes from the position near the axis (1) to the periphery of the wheel and vice versa,
v. An elliptical rail (4) arranged within the frame, parallel and close to the wheels and
vi. A second carriage (11) with second set of wheels (12), which grip and roll on the fixed elliptical rail (13), in a way that when the two wheels (2) rotate, each weight is driven either closer to the axis (1) on one side of the wheel or closer to the circumference on the opposite side.

2. Mechanism according to claim 1, **characterised in that** the common axis of rotation (1) is substantially horizontal.

3. Mechanism according to claim 1 **characterised in that** each set of spokes (5) is positioned opposite to another set of spokes.

4. Mechanism according to claims 1 or 3 **characterised in that** the spokes are connected to each other by reinforcing means (19).

5. A mechanism according to claim 1, wherein the reinforcing means (19) between the spokes are shaped so as to absorb the mechanical strains and vibrations caused by the moving weights.

6. Mechanism according to claim 1, **characterised in that** the weights (3) are cylindrical.

7. Mechanism according to claim 1, **characterised in that** the weights (3) are made of a material of a high specific weight.

8. Mechanism according to claim 3, **characterised in that** the weights (3) are made of reinforced concrete, cast iron, or similar material.

9. Mechanism according to claim 1, **characterised in that** the first set of wheels (9) and the second set of wheels (12) are claw wheels.

10. Mechanism according to claim 1, **characterised in that** the elliptical rail (4) is fixed to the frame of the mechanism.

11. Mechanism according to claim 1, wherein the claw wheels (9, 12) supporting and guiding the weights are arranged to ensure
a. low-friction rolling contact on the rails (10, 13),
b. precise guidance of the carriages without deviations and
c. that the carriages are prevented from leaving the rails.

12. A mechanism according to any of the preceding claims, wherein the common axis of rotation (1) is operatively connected to an electric generator or other energy exploitation device, so that the continuous rotation of the wheel can be converted into useful work or electrical energy.
